# EUROPEAN PATENT APPLICATION

(11) **EP 2 445 250 A1**
(43) Date of publication of application: **25.04.2012**
(21) Application number: 10788855.4
(22) Date of filing: 03.06.2010
(51) Int. Cl.: H04W 28/06

(54) **DATA PACKET SENDING, RECEIVING AND TRANSMISSION METHOD AND DEVICE**

(30) Priority: 19.06.2009 CN 200910139473
(71) Applicant: ZTE Corporation, Shenzhen, Guangdong 518057 (CN)
(72) Inventor: WEN, Wanqiang, Guangdong 518057 (CN)
(74) Representative: Jansen, Cornelis Marinus
(86) International application number: PCT/CN2010/073516
(87) International publication number: WO 2010/145459

(57) **Abstract**

The present invention discloses a method and apparatus for sending, receiving, and transmitting data packets. In the above transmitting method, a GTP-U data packet is segmented into a plurality of data packet segments, and each data packet segment is added with attribute information of its own respectively and one or more data packet segments which have been added with the attribute information are sent each time; a plurality of data packet segments are received, the attribute information carried by each data packet segment is acquired respectively, and the received data packet segments which belong to the same GTP-U data packet are combined according to the attribute information of each data packet segment, to obtain a data packet. The technical solution provided according to the present invention can control the size of the GTP-U data packet flexibly and can extend the data packet (data payload) capacity of the sending operation which is supported by GTP-U.

## Description

### Field of the Invention

The present invention relates to the communication field, and in particular to a method and apparatus for sending, receiving, and transmitting data packets.

### Background of the Invention

The trends of the separation of the electronic product code (abbreviated as EPC) network control plane from the user plane and the flattening of user plane are also an inevitable choice to deal with the sharp increase of network traffic. The throughput capacity of user plane gradually becomes the main bottleneck of the mobile packet network device serving general packet radio service support node (abbreviated as SGSN) and the gateway GRPS (general packet radio service) support node (abbreviated as GGSN), and at the same time it also leads to a rapid increase of the packet core network investment. Accordingly, the current user plane performance needs to be optimized urgently.

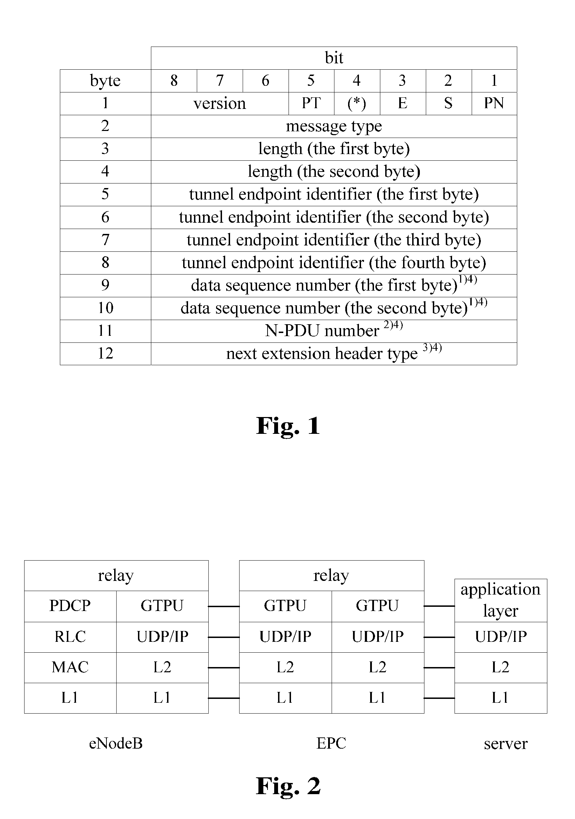

The user plane of GPRS tunneling protocol (abbreviated as GTP-U) has the function of Iu-PS user plane data transmission and path management. GTP-U is an LTE S1 interface user plane protocol and uses a general-purpose tunnel encapsulation method to encapsulate and transmit various kinds of packet data transparently so as to support various kinds of packet data. In accordance with the provisions in 3GPP TS29.060 protocol, a GTP-U data packet mainly includes two parts: the first part is GTP-U data header, the size of which is 8 to 16 bytes; and the second part is data payload, wherein the length of the GTP-U data payload is identified with two bytes and the maximum is 65535 bytes according to the GTP-U header definition (in particular referring to Fig. 1).

Fig. 1 is a schematic diagram of a GTP-U protocol header defined by 3GPP TS29.060 protocol. As shown in Fig. 1, it shows the first 12 bytes (octets) of this GTP-U protocol header and each byte includes 8 bits wherein, the fourth bit of the first byte is an idle field.

The protocol header shown in the above Fig. 1 includes: Version, Message Type, Length, Tunnel Endpoint Identifier, data Sequence Number, N-PDU Number and Next Extension Header type.

Fig. 2 is a schematic diagram of eNodeB and EPC user plane protocol. As shown in Fig. 2, for downlink data transmission, the GTP-U in evolved packet core network (abbreviated as EPC) receives the data packets sent from the application layer; and for uplink data transmission, the GTP-U in eNodeB receives the data packets sent from packet data convergence protocol (abbreviated as PDCP).

In the related art, no matter it is for the uplink data or the downlink data, the GTP-U does not process the data payload, and the GTP-U can only support the data payload not exceeding 65535 bytes. When transmitting relatively large data packets, it is easy to cause channel congestion phenomena. The packet loss phenomena may occur when the receiver is receiving data. Accordingly, it is lack of flexibility and extensibility in the GTP-U data transmission.

### Summary of the Invention

The present invention is proposed aiming to the problem in related art that it is lack of flexibility and extensibility in the GTP-U data transmission, therefore, the main object of the present invention is to provide a method and apparatus for sending, receiving, and transmitting data packets, so as to solve at least one of the above problems.

A method for sending data packets is provided according to one aspect of the present invention, which method comprises: segmenting a GTP-U data packet into a plurality of data packet segments, wherein the length of the GTP-U data packet is longer than a preset threshold and the length of each data packet segment is shorter than or equal to the preset threshold, with the preset threshold being configured by a user according to the requirements of the current network device; each data packet segment being added with attribute information of its own respectively and sending the data packet segment which has been added with the attribute information.

A method for receiving data packets is provided according to another aspect of the present invention, which method comprises: receiving a plurality of data packet segments; acquiring attribute information carried by each data packet segment respectively; and combining the received data packet segments which belong to the same GTP-U data packet according to the attribute information of each data packet segment, to obtain a data packet.

A method for transmitting data packets is provided according to yet another aspect of the present invention, which method comprises: segmenting a GTP-U data packet into a plurality of data packet segments, with each data packet segment being added with attribute information of its own respectively and one or more data packet segments which have been added with the attribute information sent each time, wherein the length of the GTP-U data packet is greater than a preset threshold and the length of each data packet segment is smaller or equal to the preset threshold, with the preset threshold being configured by a user according to the requirements of the current network device; and receiving a plurality of data packet segments, acquiring the attribute information carried by each data packet segment respectively, and combining the data packet segments which belong to the same GTP-U data packet according to the attribute information of each data packet segment, to obtain a data packet.

An apparatus for sending data packets is provided according to still another aspect of the present invention, which apparatus comprises: a segmenting unit, configured to segment a GTP-U data packet into a plurality of data packet segments, wherein the length of the GTP-U data packet is longer than a preset threshold and the length of each data packet segment is shorter than or equal to the preset threshold; and a sending unit, configured to have each data packet segment being added with attribute information of its own respectively and send one or more data packet segments which has (have) added the attribute information each time.

An apparatus for receiving data packets is provided according to still another aspect of the present invention, which apparatus comprises: a receiving unit, configured to receive a plurality of data packet segments; an acquiring unit, configured to acquire attribute information carried by each data packet segment respectively; and a combining unit, configured to combine the received data packet segments which belong to the same GTP-U data packet according to the attribute information of each data packet segment to obtain a date packet.

An apparatus for transmitting data packets is provided according to still another aspect of the present invention, which apparatus comprises: a sending unit, configured to segment a GTP-U data packet into a plurality of data packet segments, and have each data packet segment being added with attribute information of its own respectively, and send one or more data packet segments which have been added with the attribute information each time, wherein the length of the GTP-U data packet is greater than a preset threshold and the length of each data packet segment is smaller or equal to the preset threshold, with the preset threshold being configured by a user according to the requirements of the current network device; and a receiving unit, configured to receive a plurality of data packet segments, acquire the attribute information carried by each data packet segment respectively, and combine the data packet segments which belong to the same GTP-U data packet according to the attribute information of each data packet segment, to obtain the GTP-U data packet.

By virtue of the above technical solution of the present invention, a GTP-U data packet is first segmented into a plurality of data packet segments and then send those data packet segments that carry attribute information of their own, also, the receiving end can recombine the data packet segments according to the attribute information of a plurality of data packet segments. Thus, the data can be transmitted flexibly, and the size of the data packets which need to be transmitted is enlarged by sending a plurality of data packet segments.

Other features and advantages of the present invention will be described in the following description and partly become obvious from the specification, or be understood by implementing the present invention. The objects and other advantages of the present invention can be realized and obtained through the structures specified in the description, claims and drawings.

### Brief Description of the Accompanying Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a schematic diagram of a GTP-U protocol header defined by 3GPP TS29.060 protocol;
Fig. 2 is a schematic diagram of eNodeB and EPC user plane protocol;
Fig. 3 is a flow chart of a method for sending data packets according to the embodiments of the present invention;
Fig. 4 is a schematic diagram of a GTP-U protocol header according to the embodiments of the present invention;
Fig. 5 is a flow chart of a method for receiving data packets according to the embodiments of the present invention;
Fig. 6 is a flow chart of a method for transmitting data packets according to the embodiments of the present invention;
Fig. 7 is a detailed flow chart of a method for sending and receiving data packets according to the preferred embodiments of the present invention;
Fig. 8 is a block diagram of the structure of an apparatus for sending data packets according to the embodiments of the present invention;
Fig. 9 is a block diagram of the structure of an apparatus for receiving data packets according to the embodiments of the present invention;
Fig. 10 is a block diagram of the structure of an apparatus for receiving data packets according to the preferred embodiments of the present invention;
Fig. 11 is a block diagram of the structure of an apparatus for transmitting data packets according to the embodiments of the present invention;
Fig. 12 is a flow chart according to example I of the embodiments of the present invention;
Fig. 13 is a flow chart according to example II of the embodiments of the present invention; and
Fig. 14 is a flow chart according to example III of the embodiments of the present invention.

### Detailed Description of the Embodiments

In the long term evolution (LTE) technical field, as to the GTP-U data packet transmission achieved in an enhanced base station (abbreviated as eNodeB in the following), the size (length) of the data packets to be sent that the GTP-U can support is not greater than 65535 bytes payload. In order to enhance the flexibility and extensibility of GTP-U data packet transmission, it is needed to provide a solution for sending data packets by the segmenting and recombining manner. The embodiments of the present invention provide an improved solution for sending and receiving data packets. In the embodiments of the present invention, in the situation that relatively large GTP-U data packets need to be transmitted, the sender can segment a GTP-U data packet into a plurality of data packet segments, wherein the length of each data packet segment is smaller than or equal to a preset threshold; and each data packet segment is added with the attribute information of its own respectively and those data packet segments which have being added with the attribute information are sent. As to the received plural data packet segments, the receiver acquires the attribute information carried by each data packet segment respectively; and combines the data packet segments which belong to the same GTP-U data packet according to the attribute information of each data packet segment, so as to obtain a packet.

The present invention will now be described in detail with reference to the accompanying drawings and in conjunction with embodiments hereinafter. The embodiments in the present application and the features in the embodiments can be combined with each other if there is no conflict.

### Method Embodiments

A method for sending data, a method for receiving data, and a method for transmitting data are first provided according to the embodiments of the present invention.

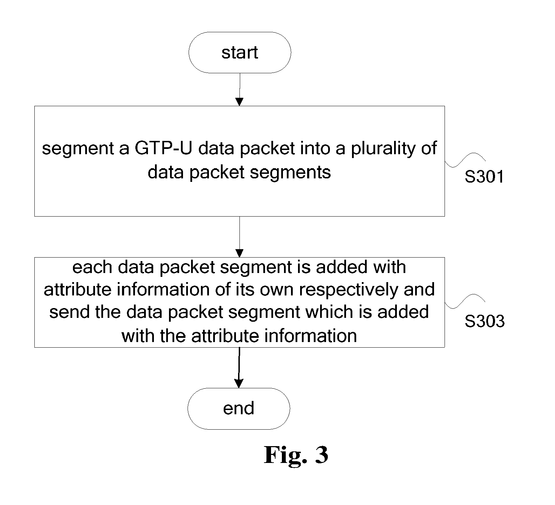

Fig. 3 is a flow chart of a method for sending data packets according to the embodiments of the present invention. As shown in Fig. 3, the method for sending data packets according to the embodiments of the present invention comprises the following processes (steps S301 to S303):
Step S301: segmenting a GTP-U data packet into a plurality of data packet segments, wherein the length of the GTP-U data packet is greater than a preset threshold and the length of each data packet segment is smaller than or equal to the preset threshold; and
during the particular implementation, a sender (GTP-U protocol entity) needs to send one or more data packets to a receiver (peer GTP-U protocol entity). When the length of the data packet is greater than the preset threshold, it is needed to perform the segment process on the above data packet and send the segmented data packet segments.

Preferably, the above preset threshold can be set flexibly as required. For example, it can be configured flexibly by operation and management (abbreviated as OAM) in the background.

Preferably, when the data packet to be sent is relatively small or the size of this data packet can be supported by the GTP-U, then this data packet can be directly transmitted without segmenting this data packet. Accordingly, whether to segment a data packet can be determined according to practical situations.

Preferably, in the situation that the data packet to be sent needs to segmented, the segment process can be performed by the following modes: segmenting a GTP-U data packet sequentially, wherein each of the segmented GTP-U data packet segments is smaller than a preset threshold; and it is judged whether the length of the remaining of the GTP-U data packet is smaller than the preset threshold after each segmenting operation, wherein if yes, then the segmenting is finished.

Preferably, there can be many particular segment modes as well, such as dichotomy, etc.

Step S303: each data packet segment being added with attribute information of its own respectively, and sending the data packet segment which is added with the attribute information.

Preferably, the above attribute information can comprise: index information of the current data packet segment, number information of the data packet to which the current data packet segment belongs, and/or identification information of the data packet to which the current data packet segment belongs, wherein in the situation that the data packet segments transmitted in a channel belong to the same data packet, the sequence number of the data packet to which the current data packet segment belongs can be identified or not. And the index information of the current data packet segment and the number information of the data packet segments which belong to the same packet are the basis for receiving and recombining the successive data packets.

Preferably, the above attribute information can further carry identification information, which identification information is used for identifying the attribute of the current data packet segment as "data packet segment". In particular, the data packets sent by the sender can be the data packet segments after the segmenting operation or can be the data packets after the segmenting operation. The receiver can judge after receiving a plurality of data packets, whether the received data packets have undergone the segmenting process according to this identification information.

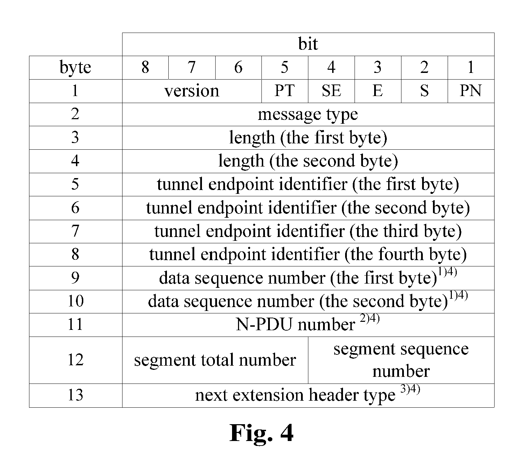

Preferably, adding the attribute information of this data packet segment can be achieved by the manner of adding a data header carrying the attribute information into the data packet segment. The GTP-U protocol layer can add one data header for each data packet segment (referring to Fig. 4), wherein the data header carries the above attribute information.

By virtue of the above embodiments, in the GTP-U protocol layer, one or more data packets can be segmented and sent as required, the size of the GTP-U data packets can be controlled flexibly, and the data packet (data payload) capacity which is supported by the GTP-U can be extended.

As another preferred embodiment, the attribute information of the above data packet segment can include: index information of the above data packet segment, number information of the data packet to which the above data packet segment belongs, and/or identification information of the data packet to which the above data packet segment belongs. Additionally, in this preferred embodiment, the above attribute information can further include: identification information for identifying the attribute of the current packet segment as "data packet segment".

Fig. 4 is a schematic diagram of a GTP-U protocol header according to the embodiments of the present invention. As shown in Fig. 4, it shows the first 13 bytes (Octets) of this GTP-U protocol header and each byte includes 8 bits, wherein the following modifications are made to the GTP-U protocol header defined by 3GPP TS29.060 protocol shown in Fig. 1.
(1) If the GTP-U data is segmented data, then the 4^{th} bit of the 1^{st} byte of the GTP-U data header is set as 1, otherwise the 4^{th} bit of the 1^{st} byte is set as 0;
(2) if the GTP-U data is segmented data, then in the situation that the 4^{th} bit of the 1^{st} byte of the GTP-U data header is set as 1, according to the segment order, the lower 4 bits of the 12^{th} byte of the GTP-U data header are filled with data segment sequence number, with the range of the sequence number from 0 to 15, and the higher 4 bits are used for being filled with data packet segment total number;
(3) in order to facilitate peer GTP-U protocol entities to recombine data packet segments, the GTP-U indicates that the segmented data belongs to the same data packet, the 2^{nd} bit of the 1^{st} byte of the GTP-U data header is set as 1, and the 9^{th} and 10^{th} bytes of the GTP-U data header are filled with data sequence number, wherein the segmented data segmented from the same data packet has the same sequence number; and
(4) the other fields of the GTP-U data header are filled according to 3GPP TS 29.060 and relevant protocols, wherein it is noted that the original protocol provides that the 12^{th} byte is used for being filled with "Next Extension Header Type", but now it is shifted to the 13^{th} byte due to the addition of the segment number field and all the GTP-U header fields (bytes) after the 13^{th} byte are also in turn shifted one byte afterward and will be used according to the provisions of the protocol.

The above protocol header shown in Fig. 4 comprises: Version, Message Type, Length, Tunnel Endpoint Identifier, data Sequence Number, N-PDU Number and Next Extension Header type, Segment Total Number, data packet Segment Sequence Number (also referred to as the index information of data packet segment).

A method for receiving data packets is further provided according to the embodiments of the present invention.

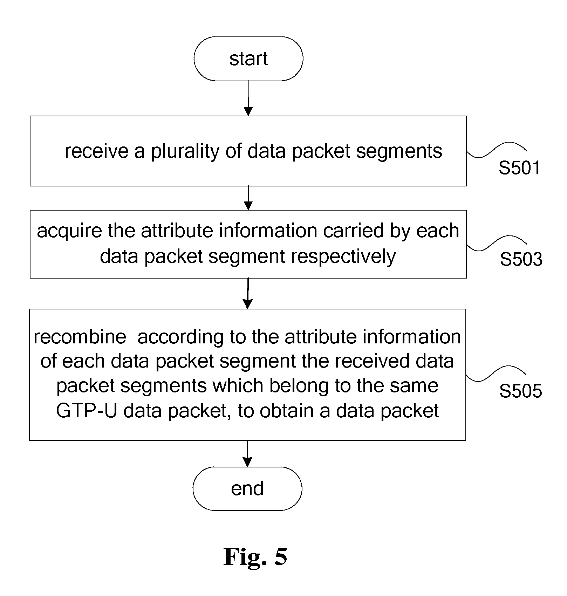

Fig. 5 is a flow chart of a method for receiving data packets according to the embodiments of the present invention. As shown in Fig. 5, the method for receiving data packets according to the embodiments of the present invention comprises the following processes (steps S501 to S505):
Step S501: receiving a plurality of data packet segments.

Preferably, after receiving a plurality of data packets, the receiver can first identify those data packets and judge whether the received data packets have been segmented.

Preferably, the 4^{th} bit of the 1^{st} byte of the GTP-U data header is read, wherein if it is found that its value is 1, then it is indicated that this data packet is a data packet segment after the segmenting operation, belonging to one certain data packet.

Step S503: acquiring the attribute information carried by each data packet segment respectively.

Preferably, the above attribute information can comprise: index information of the current data packet segment, number information of the data packet to which the current data packet segment belongs, and/or identification information of the data packet to which the current data packet segment belongs.

Step S505: combining according to the attribute information of each data packet segment the received data packet segments which belong to the same GTP-U data packet, to obtain a data packet.

Preferably, the step of combining the received data packet segments which belong to the same GTP-U data packet comprises the following processes:
(1) acquiring index information of the current data packet segment, number information of the data packet to which the current data packet segment belongs, and identification information of the data packet to which the current data packet segment belongs;
(2) determining the GTP-U data packet to which the current data packet segment belongs according to the identification information;
(3) determining according to the number information whether the receipt of all the data packet segments in the GTP-U data packet to which the current data packet segments belong is finished; and
(4) combining all the data packet segments which belong to the same GTP-U data packet according to their index information when a predetermined condition is met.

Preferably, the above predetermined condition can comprise one of the followings: the receipt of all the data packet segments which belong to the same GTP-U data packet is finished; and the receipt of all the data packet segments which belong to the same GTP-U data packet is finished within a preset receiving time threshold.

Preferably, judging whether all the data packet segments which belong to the same GTP-U data packet are received within a preset receiving time threshold can be achieved by the following manner: in the case of a data packet which has been segmented, when one certain data packet segment which belongs to this data packet is received for the first time, a timer is started to begin timing and a time threshold is set, wherein in the situation that the time threshold is arrived, it is determined whether the data packet segments which belong to this data packet are all collected according to the number of the received data packet segments which belong to this data packet and the number information carried in the attribute information of each data packet segment, wherein if not collecting all of them, then the received data packet segments are discarded, and afterwards other received data packet segments which belong to this data packet are discarded continuously.

Preferably, the above attribute information is carried by the data header of the data packet segment, wherein Fig. 4 can be referred to for the schematic diagram of the format of this data header, which will not be described here redundantly.

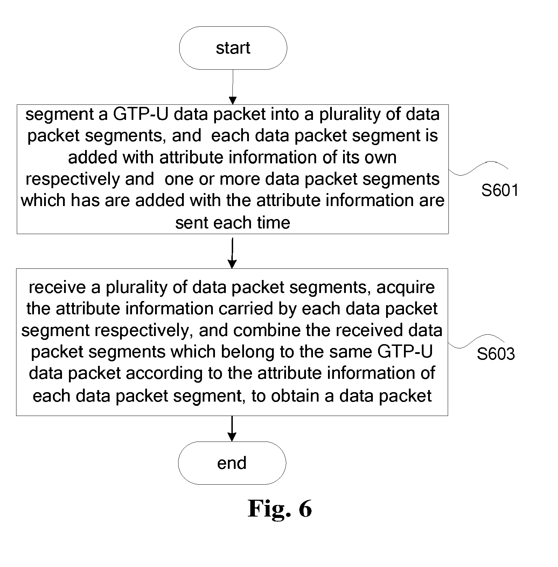

Fig. 6 is a flow chart of a method for transmitting data packets according to the embodiments of the present invention. As shown in Fig. 6, the method for transmitting data packets according to the embodiments of the present invention comprises the following processes (steps S601 to S603):
Step S601: segmenting a GTP-U data packet into a plurality of data packet segments, wherein the length of the GTP-U data packet is longer than a preset threshold and the length of each data packet segment is shorter than or equal to the preset threshold, with the preset threshold being configured by a user according to the requirements of the current network device; and each data packet segment being added with attribute information of its own respectively and one or more data packet segments which are added with the attribute information are sent each time; and
Step S603: receiving a plurality of data packet segments, acquiring the attribute information carried by each data packet segment respectively, and combining the received data packet segments which belong to the same GTP-U data packet according to the attribute information of each data packet segment, to obtain a data packet.

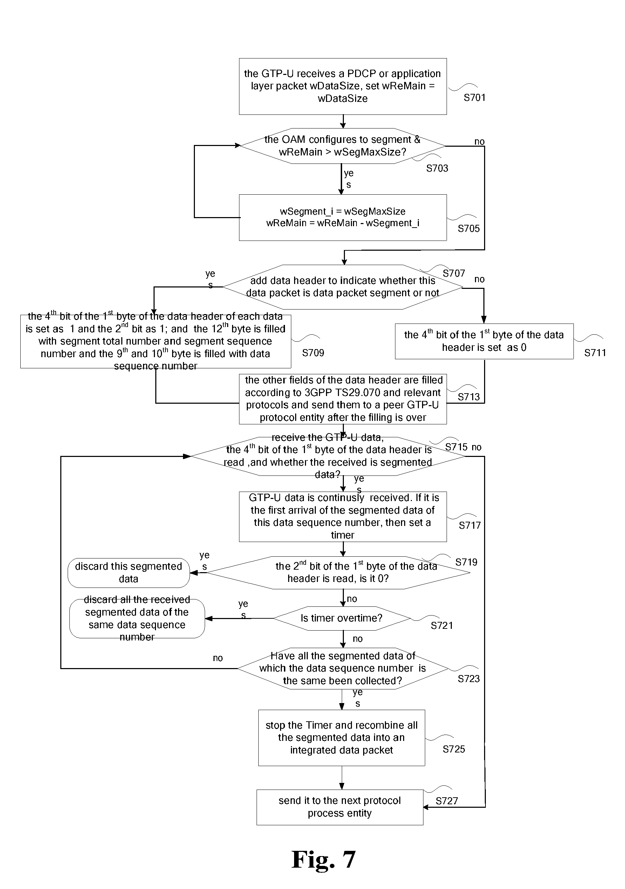

Fig. 7 is a detailed flow chart of a method for sending and receiving data packets according to the preferred embodiments of the present invention. As shown in Fig. 7, the method for sending and receiving data packets according to the preferred embodiments of the present invention comprises the following processes (steps S701 to S727):
Step S701: the GTP-U receiving a data packet from the PDCP or the application layer, wherein the size (length) of the data packet is represented by wDataSize (byte), and wDataSize is assigned to wReMain.
Step S703: the background OAM configuring the maximum length of the GTP-U data packet segment as wSegMaxSize flexibly as required and comparing the size wDataSize of this data packet with wSegMaxSize, wherein if the former is greater than the latter, then it is needed to perform segment process on this data packet and perform Step S705, otherwise Step S707 is performed.
Step S705: in the situation that a data packet needs to be segmented, if the size of the first data packet segment is represented as wSegment_0, then wSegment_0 must be smaller than or equal to wSegMaxSize; the remaining after the segment operation is wReMain = wDataSize - wSegment_0, wherein if wReMain is smaller than or equal to wSegMaxSize, then wReMain is the second data packet segment wSegment_1 without more segmenting operation needed; if wReMain is greater than wSegMaxSize, then it indicates that the remaining needs to be further segmented, wDataSize is assigned to wReMain, and Step S705 is performed continuously until the remaining is smaller than or equal to wSegMaxSize. After the segmenting is finished, the original PDCP data packet wDataSize is segmented into wSegment_0, wSegment_1, ..., wSegment_n, and the size of each segment does not exceed wSegMaxSize.
Step S707: each data packet, regardless of whether being segmented, is added with a data header respectively for indicating whether this data packet is a data packet segment.
Step S709: if this GTP-U data packet is a data packet segment, then the 4^{th} bit of the 1^{st} byte of this data header is set as 1 and the 12^{th} byte is filled with the segment total number and segment sequence number and the 9^{th} and 10^{th} byte are filled with data sequence number.

In the above, the information carried by the 4^{th} bit of the 1^{st} byte is used for determining that the attribute of the current data packet segment is data packet segment; the information carried by the 12^{th} byte represents the index information of the current data packet segment and the number information of the data packet segments which belong to the same data packet respectively; and the information carried by the 4^{th} bit of the 1^{st} byte and the 10^{th} and 11^{th} byte is used for representing the identification information of the data packet to which the current data packet segments belong.

Step S711: if this GTP-U data packet is not a data packet segment (i.e. has not undergone the segment process yet), then the 4^{th} bit of the 1^{st} byte of this data header is set as 0.

Step S713: the other fields of the data header are filled according to 3GPP TS29.070 and relevant protocols and sent to a peer GTP-U protocol entity after the filling.

Step S715: the 4^{th} bit of the 1^{st} byte of the data header of the received GTP-U data packet is read, and it is judged whether this data packet is a data packet segment, wherein if yes, Step S717 is performed, otherwise Step 727 is performed.

Step S717: GTP-U data packets are received continuously wherein if receiving a segmented data belongs to a same data packet for the first time (which is determined according to the data sequence numbers of the 9^{th} and 10^{th} bytes), then a timer is set.

Step S719: the 2^{nd} bit of the 1^{st} byte of the data header is read and it is judged whether it is 0, wherein if yes, this data packet segment is discarded, otherwise, Step S721 is performed.

Step S721: it is judged whether the timer is overtime, wherein if yes, then the received data packet segments which belong to the same data packet are discarded, otherwise Step S723 is performed.

Step S723: it is judged whether all the data packet segments which belong to the same data packet have been collected, wherein if yes, Step S725 is performed, otherwise, Step S715 is performed.

Step S725: the timer is stopped and all the data packet segments which belong to the same data packet are combined,
wherein these data packet segments are combined into an integrated data packet sequentially according to the index information of the above data packet segments.

Step S727: the above integrated data packet combined as above is sent to the next protocol process entity.

Preferably, during the above process, one or more data packets can be segmented and combined simultaneously, which improves the flexibility and extensibility of the transmission of one or more data packets in GTP-U protocol layer.

By virtue of the above embodiments, the size of the GTP-U data packets can be controlled flexibly by segmenting and recombining the GTP-U data packets so as to facilitate transmission. At the same time, the data payload capacity of the sending and receipt which are supported by the GTP-U can be extended effectively.

### Apparatus Embodiments

An apparatus for sending data, an apparatus for receiving data, and an apparatus for transmitting data are further provided according to the embodiments of the present invention.

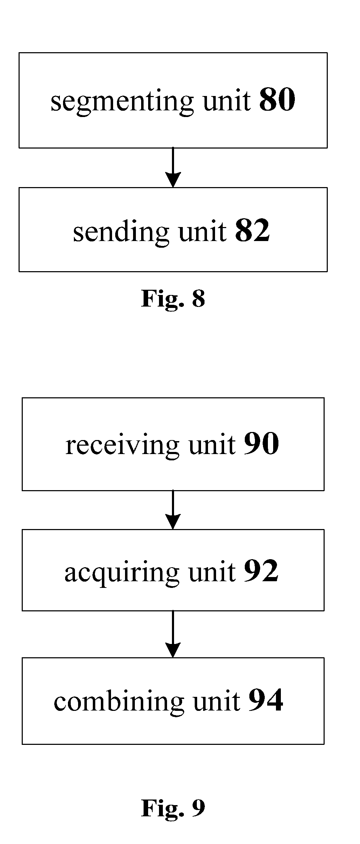

Fig. 8 is a block diagram of the structure of an apparatus for sending data packets according to the embodiments of the present invention. As shown in Fig. 8, the apparatus for sending data packets according to the embodiments of the present invention comprises: a segmenting unit **80** and a sending unit **82,** wherein the segmenting unit **80** is configured to segment a GTP-U data packet into a plurality of data packet segments, with the length of the GTP-U data packet greater than a preset threshold and the length of each data packet segment smaller than or equal to the preset threshold; and the sending unit **82** being connected to the segmenting unit **80** is configured to have each packet segment added with attribute information of its own respectively and send one or more data packet segments which have been added with the attribute information each time.

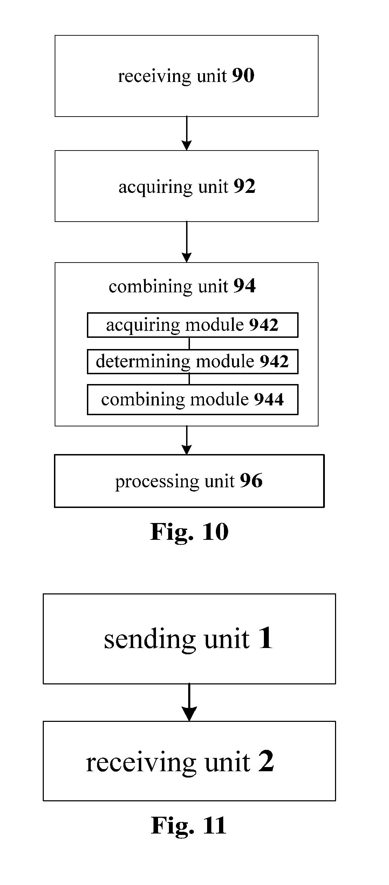

Fig. 9 is a block diagram of the structure of an apparatus for receiving data packets according to the embodiments of the present invention. Fig. 10 is a block diagram of the structure of an apparatus for receiving data packets according to the preferred embodiments of the present invention. As shown in Fig. 9, the apparatus for receiving data packets according to the embodiments of the present invention comprises: a receiving unit **90,** an acquiring unit 92, and a combining unit **94.**

In the above, the receiving unit **90** is configured to receive a plurality of data packet segments;
the acquiring unit **92** connected to the receiving unit **90** is configured to acquire the attribute information carried by each data packet segment respectively;
the combining unit **94** connected to the acquiring unit **92** is configured to combine the received data packet segments which belong to the same GTP-U data packet according to the attribute information of each data packet segment, to obtain a data packet.

Preferably, as shown in Fig. 10, the combining unit 94 can further comprise: an acquiring module **940,** a determining module **942,** and a combining module **944,** wherein the acquiring module **940** is configured to acquire identification information of the data packet to which the current data packet segment belongs, index information of the current data packet segment, and number information of the data packet to which the current data packet segment belongs; the determining module **942** is configured to determine the data packet to which the current GTP-U data packet segment belongs according to the identification information and whether the receipt of all the data packet segments in the data packet to which the current GTP-U data packet segment belongs is finished according to the number information; and the combining module **944** is configured to combine all GTP-U data packet segments which belong to the same GTP-U data packet according to their index information when a predetermined condition is met.

Preferably, as shown in Fig. 10, the receiving apparatus can further comprises: a processing module **96** configured to , in the situation that not all GTP-U data packet segments which belong to the same GTP-U data packet are received within a receiving time threshold, discard the received GTP-U data packet segments which belong to this GTP-U data packet.

Fig. 11 is a block diagram of the structure of an apparatus for transmitting data packets according to the embodiments of the present invention. As shown in Fig. 11, the apparatus for transmitting data packets according to the embodiments of the present invention comprises: a sending unit 1 and a receiving unit **2.**

In the above, the sending unit **1** is configured to segment a GTP-U data packet into a plurality of data packet segments, wherein the length of the GTP-U data packet is longer than a preset threshold and the length of each data packet segment is shorter than or equal to the preset threshold, with the preset threshold being configured by a user according to the requirements of the current network device, and each data packet segment is added with attribute information of its own and one or more data packet segments which have been added with the attribute information are sent each time; and
the receiving unit **2** connected to the sending unit **1** is configured to receive a plurality of data packet segments, acquire the attribute information carried by each data packet segment respectively, and combine the received data packet segments which belong to the same GTP-U data packet according to the attribute information of each packet segment, to obtain a data packet.

### Example I

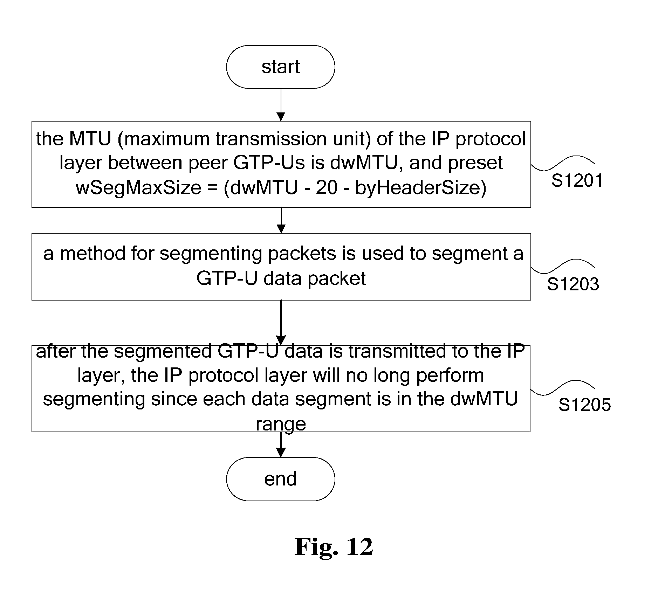

Fig. 12 is a flow chart according to example I of the embodiments of the present invention. As shown in Fig. 12, this example I mainly comprises the following processes (Step S1201 to 1205).

Step S1201: the MTU (maximum transmission unit) of the IP protocol layer between peer GTP-Us is dwMTU, with presetting wSegMaxSize = (dwMTU - 20 - byHeaderSize), wherein wSegMaxSiz is a preset threshold configured in the background, "20" is the size of the IP protocol header, and byHeaderSize is the size of the above GTP-U data header.

Step S1203: a method for segmenting data packets is used to segment a GTP-U data packet,
wherein the description in Fig. 3 may be referred to for the above segmenting method, which will not be described here redundantly.

Step S1205: after the segmented GTP-U data is transmitted to the IP layer, the IP protocol layer will no long perform segmenting since each data segment is in the dwMTU range.

By virtue of this embodiment, the IP protocol layer of the sending end no longer needs to segment the IP data packet, so the IP protocol layer of the receiving end neither needs to recombine the IP data packet segments, therefore the segmenting and recombination of IP transmission between peer GTP-Us can be reduced, the processing complexity of S1 port transmission can be decreased, and the processing efficiency of S1 port data transmission can be improved.

### Example II

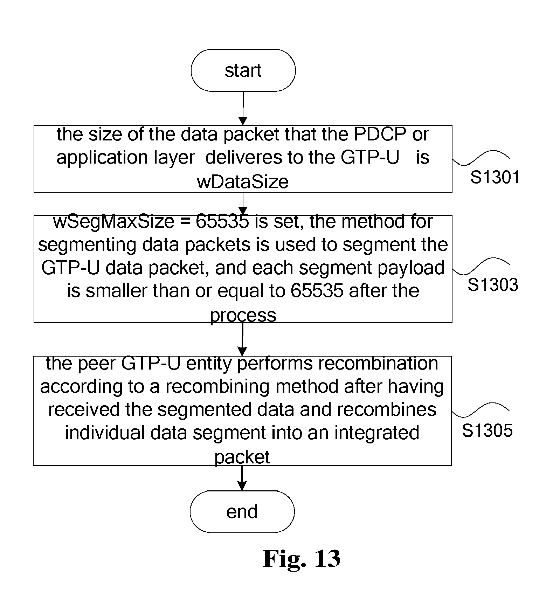

Fig. 13 is a flow chart according to example II of the embodiments of the present invention. As shown in Fig. 13, this example II mainly comprises the following processes (Step S1301 to S1305):
Step S1301: the size of the data packet that the PDCP or application layer delivers to the GTP-U is wDataSize, wherein wDataSize is greater than 65535 bytes and smaller than or equal to 9133025 (65535 x 15) bytes.
Step S1303: wSegMaxSize = 65535 is set, the method for segmenting data packets is used to segment the GTP-U data packet, and each segment payload is smaller than or equal to 65535 after the process,
   wherein the description in Fig. 3 may be referred to for the above segmenting method, which will not be described here redundantly.
Step S1305: the peer GTP-U entity performs recombination according to a recombining method after receiving the segmented data and recombining individual data segments into an integrated data packet, wherein the size of this data packet can exceed 65535 bytes.

In the above, the above recombining method can be leaned by referring to the description in Fig. 4, which will not be described here redundantly.

By virtue of this embodiment, the GTP-U data packets of which the length exceeds 65535 bytes can be sent and received, thus the extensibility in GTP-U data packet transmission is enhanced.

### Example III

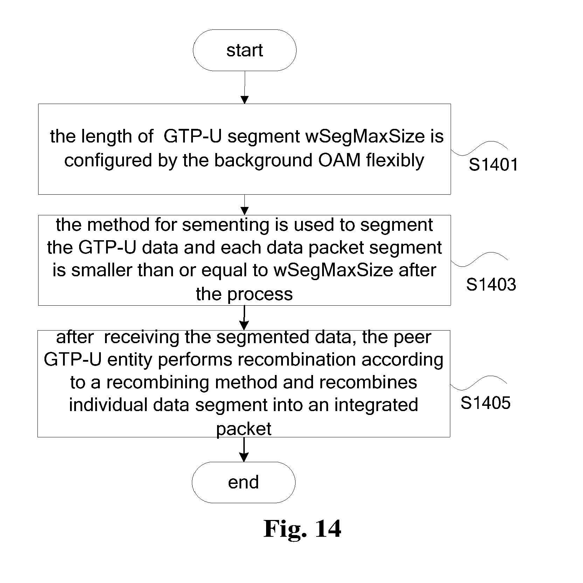

Fig. 14 is a flow chart according to example III of the embodiments of the present invention. As shown in Fig. 14, this example III mainly comprises the following processes (Step S1401 to S1405):
Step S1401: the length of GTP-U segment wSegMaxSize is configured by the background OAM (Operation And Management) flexibly.
Step S1403: the segmenting method is used to segment the GTP-U data and each data packet segment after the process is smaller than or equal to wSegMaxSize,
   wherein the above segmenting method can be learned by referring to the description in Fig. 3, which will not be described here redundantly.
Step S1405: after receiving the segmented data, the peer GTP-U entity performs recombination according to the recombining method and recombines individual data segments into an integrated data packet.

In the above, the above recombining method can be learned by referring to the description in Fig. 4, which will not be described here redundantly.

By virtue of this embodiment, the size of the GTP-U data packet can be controlled flexibly, and the data packet capacity of the sending and receipt which are supported by the GTP-U can be extended.

In summary, a method for segmenting a data packet and recombining data packet segments is provided by virtue of the above embodiments of the present invention, which can reduce the transmission and process complexity, thus improving IP transmission efficiency. Also, the size of the GTP-U data packet can be controlled flexibly according to the practical situation, and the GTP-U can be extended to support to send and receive data payload the maximum size of which is 983025 bytes.

Apparently, those skilled in the art shall understand that the above-mentioned modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

## Claims

1. A method for sending data packets, **characterized in that** it comprises:
segmenting a general packet radio service tunneling protocol user plane GTP-U data packet into a plurality of data packet segments, wherein the length of said GTP-U data packet is longer than a preset threshold and the length of each data packet segment is shorter than or equal to said preset threshold, with said preset threshold being configured by a user according to the requirements of the current network device; and
each data packet segment being added with attribute information of its own respectively and sending the data packet segment which has been added with said attribute information.

2. The method according to claim 1, **characterized in that** the attribute information of said data packet segment comprises:
index information of said data packet segment, number information of the data packet to which said data packet segment belongs, and/or identification information of the data packet to which said data packet segment belongs.

3. The method according to claim 2, **characterized in that** said attribute information further carries identification information for identifying the attribute of the current data packet segment as 'data packet segment'.

4. The method according to claim 1, **characterized in that** the step of sending the data packet segment which has been added with said attribute information comprises at least one of the following modes:
respectively sending each data packet segment contained in said GTP-U data packet which has been added with said attribute information; and
sending a plurality of data packet segments contained in said GTP-U data packet which have been added with said attribute information each time.

5. The method according to any one of claims 1 to 4, **characterized in that** adding the attribute information of this data packet segment comprises:
adding a data header carrying said attribute information into said data packet segment.

6. A method for receiving data packets, **characterized in that** it comprises:
receiving a plurality of data packet segments;
acquiring the attribute information carried by each data packet segment respectively; and
combining the received data packet segments which belong to the same GTP-U data packet according to the attribute information of each said data packet segment, to obtain a data packet.

7. The method according to claim 6, **characterized in that** the attribute information of said data packet segment includes:
index information of said data packet segment, number information of the data packet to which said data packet segment belongs, and/or identification information of the data packet to which said data packet segment belongs.

8. The method according to claim 7, **characterized in that** said step of combining the received data packet segments which belong to the same GTP-U data packet comprises:
acquiring said identification information, said index information, and said number information;
determining the GTP-U data packet to which said data packet segment belongs according to said identification information;
determining according to said number information whether the receipt of all the data packet segments of the GTP-U data packet to which said data packet segments belong is finished; and
combining all the data packet segments which belong to the same GTP-U data packet according to their index information when a predetermined condition is met.

9. The method according to claim 8, **characterized in that** said predetermined condition comprises one of the followings:
the receipt of all the data packet segments which belong to the same GTP-U data packet is finished; and
the receipt of all the data packet segments which belong to the same GTP-U data packet is finished within a preset receiving time threshold.

10. The method according to claim 9, **characterized in that** said method further comprises:
discarding the received data packet segments which belong to the GTP-U data packet if not all the data packet segments which belong to the this same GTP-U data packet are received within said receiving time threshold.

11. The method according to any one of claims 6 to 10, **characterized in that** said attribute information is carried by the data header of said data packet segment.

12. A method for transmitting data packets, comprising:
segmenting a GTP-U data packet into a plurality of data packet segments, with each data packet segment being added with attribute information of its own respectively and one or more said data packet segments which have been added with said attribute information sent each time, wherein the length of said GTP-U data packet is greater than a preset threshold and the length of each said data packet segment is smaller than or equal to said preset threshold, with said preset threshold being configured by a user according to the requirements of the current network device; and
receiving the plurality of said data packet segments, acquiring the attribute information carried by each said data packet segment respectively, and combining the data packet segments which belong to the same GTP-U data packet according to the attribute information of each data packet segment, to obtain a data packet.

13. An apparatus for sending data packets, **characterized in that** it comprises:
a segmenting unit, configured to segment a GTP-U data packet into a plurality of data packet segments, wherein the length of said GTP-U data packet is greater than a preset threshold and the length of each data packet segment is smaller than or equal to said preset threshold; and
a sending unit, configured to have each data packet segment being added with attribute information of its own respectively and send one or more said data packet segments which have being added with said attribute information each time.

14. An apparatus for receiving data packets, **characterized in that** it comprises:
a receiving unit, configured to receive a plurality of data packet segments;
an acquiring unit, configured to acquire attribute information carried by each said data packet segment respectively; and
a combining unit, configured to combine the received data packet segments which belong to the same GTP-U data packet according to the attribute information of each said data packet segment, to obtain a data packet.

15. The apparatus according to claim 14, **characterized in that** said combining unit comprises:
an acquiring module, configured to acquire identification information of the data packet to which said data packet segment belongs, index information of said data packet segment, and number information of the data packet to which said data packet segment belongs;
a determining module, configured to determine the GTP-U data packet to which said data packet segment belongs according to said identification information and whether the receipt of all the data packet segments of the GTP-U data packet to which said data packet segment belongs is finished according to said number information; and
a combining module, configured to combine all the data packet segments which belong to the same GTP-U data packet according to their index information, when a predetermined condition is met.

16. The apparatus according to claim 15, **characterized in that** said apparatus further comprises:
a processing module configured to, in the situation that not all the data packet segments which belong to the same GTP-U data packet are received within said receiving time threshold, discard the received data packet segments which belong to this GTP-U data packet.

17. An apparatus for transmitting data packets, **characterized in that** it comprises:
a sending unit, configured to segment a GTP-U data packet into a plurality of data packet segments, and have each said data packet segment being added with attribute information of its own respectively and send one or more said data packet segments which have been added with said attribute information each time, wherein the length of said GTP-U data packet is greater than a preset threshold and the length of each said data packet segment is smaller than or equal to said preset threshold, with said preset threshold being configured by a user according to the requirements of the current network device; and
a receiving unit, configured to receive said plurality of said data packet segments, acquire the attribute information carried by each said data packet segment respectively, and combine the data packet segments which belong to the same GTP-U data packet according to the attribute information of each data packet segment, to obtain said GTP-U data packet.
